# EUROPÄISCHE PATENTANMELDUNG

(11) **EP 4 683 212 A1**
(43) Veröffentlichungstag der Anmeldung: **21.01.2026**
(21) Anmeldenummer: 25189402.8
(22) Anmeldetag: 14.07.2025
(51) Int. Cl.: H02S 20/30, F24S 25/634, H02S 20/32

(54) **SOLARMODULHALTEVORRICHTUNG**

(30) Priorität: 15.07.2024 DE 102024120170
(71) Anmelder: Zimmermann, Robert, 88436 Eberhardzell (DE)
(72) Erfinder: Zimmermann, Robert, 88436 Eberhardzell (DE)
(74) Vertreter: Daub, Thomas

(57) **Zusammenfassung**

Die Erfindung geht aus von einer Solarmodulhaltevorrichtung zur Montage zumindest eines Solarmoduls (14a, 16a; 14a, 16b), mit einem Grundgestell (20a; 20b) zur Anbindung des zumindest einen Solarmoduls (14a, 16a; 14a, 16b) an einen Untergrund (18a; 18b), und mit einem Grundträger (26a, 28a; 26b, 28b), der zumindest zur teilweisen Anbindung des zumindest einen Solarmoduls (14a, 16a; 14a, 16b) an das Grundgestell (20a; 20b) vorgesehen ist, und der eine Auflagefläche (34a; 34b) für ein Solarmodul (14a, 16a; 14a, 16b) ausbildet, wobei der Grundträger (26a, 28a; 26b, 28b) als ein Profilrohr ausgebildet ist.

## Beschreibung

### Stand der Technik

Die Erfindung betrifft eine Solarmodulhaltevorrichtung nach dem Oberbegriff des Patentanspruchs 1.

Es ist bereits eine Solarmodulhaltevorrichtung zur Montage zumindest eines Solarmoduls mit einem Grundgestell zur Anbindung zumindest eines Solarmoduls an einen Untergrund, mit einem Grundträger, der zumindest zur teilweisen Anbindung des zumindest einen Solarmoduls an das Grundgestell vorgesehen ist und der eine Auflagefläche für ein Solarmodul ausbildet, wobei der Grundträger als ein Blechbiegeteil ausgebildet ist, vorgeschlagen worden.

Die Aufgabe der Erfindung besteht insbesondere darin, eine gattungsgemäße Vorrichtung mit verbesserten Eigenschaften hinsichtlich einer einfachen Montage, einer Variabilität und einer platzsparenden Lagerung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Solarmodulhaltevorrichtung zur Montage zumindest eines Solarmoduls, mit einem Grundgestell zur Anbindung des zumindest einen Solarmoduls an einen Untergrund, und mit einem Grundträger, der zumindest zur teilweisen Anbindung des zumindest einen Solarmoduls an das Grundgestell vorgesehen ist und der eine Auflagefläche für ein Solarmodul ausbildet, wobei der Grundträger als ein Profilrohr ausgebildet ist.

Es wird vorgeschlagen, dass der Grundträger wenigstens eine Halteelementaufnahme aufweist, die zur positionsfesten Aufnahme eines Solarmodulhalteelements vorgesehen ist, das zur Halterung eines Solarmoduls über die Halteelementaufnahme fest mit dem Grundträger verbindbar ist. Unter einer "Solarmodulhaltevorrichtung" soll vorzugsweise eine Vorrichtung verstanden werden, mittels der Solarmodule auf einem Untergrund aufgestellt werden können. Die Solarmodulhaltevorrichtung bildet eine tragende Struktur aus, mittels der die Solarmodule an dem Untergrund befestigt sind. Über die Solarmodulhaltevorrichtung werden die Gewichtskraft der Solarmodule und weitere auf die Solarmodule wirkende Kräfte, wie beispielsweise Windkräfte, in den Untergrund abgeleitet. Die Solarmodulhaltevorrichtung weist vorzugsweise ein Grundgestell auf. Das Grundgestell kann vorzugsweise mehrere Stützelemente aufweisen, die mit dem Untergrund fest verbunden sind. Unter einem "Stützelement" soll vorzugsweise ein Element verstanden werden, das fest mit dem Untergrund verbunden ist. Vorzugsweise ist das Stützelement in den Boden eingebracht. Das Stützelement kann als ein länglicher Träger ausgebildet sein, der dazu vorgesehen ist, entlang seiner Längsachse in den Boden eingebracht zu werden. Vorzugsweise ist ein Stützelement als ein Rammprofil ausgebildet, das zur Befestigung an dem Untergrund dazu vorgesehen ist, in den Untergrund gerammt zu werden. Grundsätzlich wäre es auch denkbar, dass ein Stützelement als ein Träger ausgebildet ist, der auf eine andere Weise auf einem Untergrund angebracht ist, beispielsweise durch eine Schraubenverbindung.

Unter einem "Untergrund", auf dem die Solarmodule mittels des Grundgestells aufgeständert werden können, soll beispielsweise ein Boden oder ein Bauwerk, wie beispielsweise ein Gebäude oder ähnliches verstanden werden. Grundsätzlich wäre es auch denkbar, dass der Untergrund von Schwimmelementen ausgebildet ist, die auf einem Gewässer schwimmen. Für die erfindungsgemäße Ausgestaltung der Solarmodulhaltevorrichtung ist der Untergrund, auf dem sie aufgeständert wird, irrelevant.

Unter einem "Solarmodul" soll insbesondere ein Modul verstanden werden, welches dazu vorgesehen ist, Strom aus Sonnenlicht zu erzeugen. Vorzugsweise ist das Solarmodul als ein Photovoltaikmodul ausgebildet. Unter "an dem Untergrund befestigt" soll vorzugsweise so mit dem Untergrund verbunden verstanden werden, dass Kräfte, vorzugsweise zumindest vertikal wirkende Kräfte, sowie seitlich wirkende Kräfte, in den Untergrund abgeleitet werden können.

Unter einem "Solarmodul" soll insbesondere ein Modul verstanden werden, welches dazu vorgesehen ist, eine Energie des Sonnenlichts umzuwandeln. Vorzugsweise ist ein Solarmodul zur Erzeugung eines elektrischen Stroms aus Sonnenlicht vorgesehen. Vorzugsweise ist ein Solarmodul als ein Photovoltaikmodul ausgebildet.

Unter einem "Grundträger" soll ein Trägerelement verstanden werden, das zur teilweisen Anbindung von zumindest einem Solarmodul, vorzugsweise zumindest zwei Solarmodulen vorgesehen ist. Der Grundträger bildet vorzugsweise eine Auflagefläche aus, auf der ein Solarmodul zur Anbindung an den Grundträger mit seiner Rückseite aufliegt. Die Auflagefläche des Grundträgers ist dazu vorgesehen, dass ein an dem Grundträger angebundenes Solarmodul in einem Randbereich mit seiner Rückseite auf ihr aufliegt. Grundsätzlich wäre es auch denkbar, dass ein Solarmodul lediglich in Teilbereichen mit seiner Rückseite auf der Auflagefläche des Grundträgers aufliegt.

Unter einer "teilweisen Anbindung eines Solarmoduls" soll vorzugsweise verstanden werden, dass mittels eines Grundträgers ein Solarmodul zumindest in einem Seitenbereich angebunden ist. In einem vorzugsweise gegenüberliegenden Randbereich ist ein Solarmodul vorzugsweise mittels eines weiteren Elements, insbesondere mittels eines weiteren Grundträgers, angebunden. Vorzugsweise ist ein Solarmodul über zwei, vorzugsweise gleich ausgebildete Grundträger an das Grundgestell angebunden, wobei das Solarmodul mit je einem Randbereich auf einer Auflagefläche eines Grundträgers aufliegt.

Unter einem "Profilrohr" soll vorzugsweise ein Rohr verstanden werden, das einen vorzugsweise unrunden Querschnitt aufweist und zumindest eine ebene Auflagefläche ausbildet. Ein Profilrohr weist vorzugsweise einen rechteckigen Querschnitt auf. Vorzugweise bildet ein Profilrohr einen geschlossenen Querschnitt aus. Grundsätzlich wäre es auch denkbar, dass das Profilohr ein geöffnetes Profil aufweist, beispielsweise auf einer Seite eine Ausnehmung, insbesondere einen Schlitz, aufweist. Vorzugsweise ist ein Profilrohr als ein Blechbiegebauteil ausgebildet. Ein Blechbiegebauteil ist ein in einem Biegeverfahren aus einer ebenen Platte, insbesondere einem ebenen Blech, gebogenes Bauteil. Der Grundträger ist vorzugsweise als ein Blechbiegebauteil ausgebildet. Grundsätzlich wäre es auch denkbar, dass ein Profilrohr in einem anderen Herstellverfahren hergestellt ist, beispielsweise in einem Strangpressverfahren. Grundsätzlich wäre also auch denkbar, dass der Grundträger von einem Strangpressprofil gebildet ist.

Unter einer "Halteelementaufnahme" soll eine Aufnahme verstanden werden, in der ein Solarmodulhalteelement positionsfest angebunden werden kann. Vorzugsweise ist die Halteelementaufnahme dazu vorgesehen, ein Solarmodulhalteelement formschlüssig aufzunehmen.

Unter einem "Solarmodulhalteelement" soll ein Element verstanden werden, über das zumindest ein Solarmodul an den Grundträger angebunden werden kann. Vorzugsweise ist ein Solarmodulhalteelement zu einer positionsfesten Vormontage eines Solarmoduls an dem Grundträger vorgesehen. Das Solarmodulhalteelement ist dazu vorgesehen, dass zumindest ein Solarmodul an ihm formschlüssig angebunden werden kann. Vorzugsweise ist das Solarmodulhalteelement dazu vorgesehen, dass zumindest ein Solarmodul an ihm eingehängt werden kann. Zur Anbindung eines Solarmoduls weist das Solarmodulhalteelement zumindest ein Formschlusselement, insbesondere ein Hakenelement auf. Vorzugsweise ist ein Solarmodulhalteelement zur Anbindung von zwei Solarmodulen vorgesehen und weist dazu jeweils ein Formschlusselement, also ein Hakenelement auf. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch eine erfindungsgemäße Ausgestaltung kann vorteilhaft erreicht werden, dass ein Solarmodulhalteelement besonders einfach und vorzugsweise werkzeuglos mit dem Grundträger verbindbar ist. Das Solarmodulhalteelement kann besonders einfach als separates Bauteil ausgebildet werden. Dadurch kann das Solarmodulhalteelement besonders vorteilhaft angepasst und beispielsweise mit anderen Eigenschaften, beispielsweise bezüglich einer Festigkeit als der Grundträger ausgebildet werden. Dadurch kann eine besonderes vorteilhafte Variabilität bereitgestellt werden. Vorzugsweise können die Solarmodulhalteelemente erst bei einer Montage der Solarmodulhaltevorrichtung vor Ort montiert werden, dadurch können beispielsweise Lagerkosten reduziert werden, da ein Grundträger ohne ein Solarmodulhalteelement weniger Lagerraum benötigt.

Weiter wird vorgeschlagen, dass die Halteelementaufnahme des Grundträgers zur positionsfesten Halterung von wenigstens zwei unterschiedlichen Solarmodulhalteelementen vorgesehen ist, die zur Anbindung unterschiedlicher Solarmodule wahlweise über die Halteelementaufnahme form- und/oder kraftschlüssig mit dem Grundträger verbindbar sind. Unter "unterschiedlichen Solarmodulhalteelementen" sollen vorzugsweise Solarmodulhalteelemente, die jeweils zur Halterung von unterschiedlichen Solarmodulen vorgesehen sind und dazu unterschiedlich ausgebildete und/oder unterschiedlich angeordnete Formschlusselemente aufweisen. Vorzugsweise weisen die Formschlusselemente der unterschiedlichen Solarmodulhalteelemente in einem montierten Zustand in einer Querrichtung des Grundträgers unterschiedliche Abstände zu einer Mittelachse des Grundträgers auf, wodurch mittels der unterschiedlichen Solarmodulhalteelemente insbesondere verschiedene Solarmodule mit unterschiedlichen Befestigungslochabständen von den Solarmodulhalteelementen an den Grundträger angebunden, insbesondere vormontiert, werden können.

Dadurch kann ein Grundträger besonders einfach zur Befestigung von unterschiedlichen Solarmodulen, insbesondere unterschiedlich großen Solarmodulen oder Solarmodulen mit unterschiedlichen Anordnungen an Befestigungsausnehmungen angepasst werden. Dadurch kann besonders vorteilhaft ein System bereitgestellt werden, bei dem durch Bereitstellung unterschiedlicher Solarmodulhalteelemente die Anbindung an einen Grundträger für unterschiedliche Projekte, insbesondere unterschiedliche Solarparks, einfach und kostengünstig zur Halterung unterschiedlicher Solarmodule angepasst werden kann.

Ferner wird vorgeschlagen, dass der Grundträger zur Befestigung eines Solarmoduls zumindest die eine Halteelementaufnahme aufweist, in die zur Halterung zumindest eines Solarmoduls ein Solarmodulhalteelement form- und/oder kraftschlüssig angebunden ist. Unter "form- und/oder kraftschlüssig angebunden" soll vorzugsweise über einen Formschluss und/oder einen Kraftschluss, insbesondere einen Reibschluss positionssicher verbunden verstanden werden. Dadurch kann die Halteelementaufnahme besonders einfach zur Anbindung eines Solarmodulhalteelements ausgebildet werden, wobei insbesondere eine einfache werkzeuglose Montage möglich ist.

Es wird weiterhin vorgeschlagen, dass die wenigstens eine Halteelementaufnahme eine Ausnehmung in dem Grundträger ausbildet, die einen unrunden Querschnitt aufweist. Vorzugsweise weist die zumindest eine Ausnehmung, die die Halteelementaufnahme aufweist, einen rechteckigen Querschnitt auf, wobei Ecken der Ausnehmung vorzugsweise abgerundet sind. Vorzugsweise ist eine Ausnehmung, die die Halteelementaufnahme aufweist, als ein Vieleck mit abgerundeten Ecken ausgebildet. Dadurch kann die Halteelementaufnahme besonders einfach ausgebildet werden.

Des Weiteren wird vorgeschlagen, dass die wenigstens eine Halteelementaufnahme eine in einer Seitenwandung des Grundträgers angeordnete Ausnehmung ausbildet. Unter einer "Seitenwandung" soll vorzugsweise eine sich in Längsrichtung des Grundträgers erstreckende Wandung verstanden werden. Die beiden Seitenwandungen des Grundträgers verlaufen vorzugsweise parallel zueinander. Dadurch kann die Halteelementaufnahme besonders einfach ausgebildet werden.

Weiter wird vorgeschlagen, dass die wenigstens eine Halteelementaufnahme wenigstens einen Einführbereich, über den ein Solarmodulhalteelement in die Halteelementaufnahme einführbar ist, und einen Haltebereich ausbildet, in dem ein Solarmodulhalteelement zur Halterung eines Solarmoduls formschlüssig fixierbar ist. Unter einem "Einführbereich" soll vorzugsweise ein Bereich der Halteelementaufnahme, insbesondere einer Ausnehmung der Halteelementaufnahme verstanden werden, dessen Abmessungen so ausgelegt sind, dass ein Solarmodulhalteelement durch diese hindurchgeführt werden kann. Der Einführbereich weist vorzugsweise Abmessungen auf, die minimal größer sind als ein in einer Querrichtung betrachteter Umriss eines Solarmodulhalteelements. Unter einem "Haltebereich" soll vorzugsweise ein Bereich verstanden werden, in dem ein Solarmodulhalteelement mit einem korrespondierend ausgebildeten Formschlussbereich kraft- und/oder formschlüssig fixierbar ist. Dadurch kann die Halteelementaufnahme besonders einfach zur einfachen Montage und Fixierung eines Solarmodulhalteelements ausgebildet werden.

Zudem wird vorgeschlagen, dass die Halteelementaufnahme zwei koaxial zueinander angeordnete Ausnehmungen ausbildet, die in gegenüberliegende Seitenwandungen des Grundträgers eingebracht sind. Dadurch kann die Halteelementaufnahme besonders einfach ausgebildet werden.

Weiterhin wird vorgeschlagen, dass die Solarmodulhaltevorrichtung wenigstens ein Solarmodulhalteelement aufweist, das wenigstens einen Formschlussbereich aufweist, mit dem das Solarmodulhalteelement in der wenigstens einen Halteelementaufnahme kraft- und/oder formschlüssig befestigbar ist. Unter einem "Formschlussbereich" soll vorzugsweise ein Bereich verstanden werden, der korrespondierend zu einem Haltebereich einer Halteelementaufnahme ausgebildet und zur form- und/oder kraftschlüssigen Verbindung mit dem Haltebereich vorgesehen ist. Dadurch kann das Solarmodulhalteelement besonders vorteilhaft zur einfachen Verbindung mit der Halteelementaufnahme ausgebildet werden.

Es wird weiter vorgeschlagen, dass die Solarmodulhaltevorrichtung wenigstens ein Solarmodulhalteelement aufweist, das wenigstens ein Formschlusselement, insbesondere ein Hakenelement aufweist, das zur formschlüssigen Verbindung mit einem Solarmodul vorgesehen ist. Unter einem "Formschlusselement" soll vorzugsweise ein Element verstanden werden, das zu einem Formschluss mit einem korrespondierend ausgebildeten Element, insbesondere einer Befestigungsausnehmung eines Solarmoduls, vorgesehen ist. Vorzugsweise ist das Formschlusselement als ein Hakenelement mit einem um im Wesentlichen 90 Grad umgebogenen Haken ausgebildet. Grundsätzlich wäre es auch denkbar, dass das Formschlusselement als ein Steckelement, wie beispielsweise ein Stift ausgebildet ist. Dadurch kann das Solarmodulhalteelement besonders einfach zur formschlüssigen Anbindung eines Solarmoduls ausgebildet werden.

Weiter wird vorgeschlagen, dass das wenigstens eine Formschlusselement dazu vorgesehen ist, in einem mit dem Grundträger verbundenen Zustand in Querrichtung seitlich von der Seitenwandung des Grundträgers beabstandet angeordnet zu sein. Dadurch kann das Formschlusselement besonders vorteilhaft zur Kopplung mit Befestigungsausnehmungen eines Solarmoduls ausgerichtet werden.

Weiterhin wird vorgeschlagen, dass die Solarmodulhaltevorrichtung wenigstens ein Solarmodulhalteelement aufweist, das zwei Formschlusselemente, insbesondere zwei Hakenelemente aufweist, die in einem mit dem Grundträger verbundenen Zustand in Querrichtung auf gegenüberliegenden Seiten des Grundträgers angeordnet sind. Die zwei Formschlusselemente sind zur Anbindung zweier direkt nebeneinander angeordneter Solarmodule an den einen Grundträger vorgesehen. Dadurch können mittels des einen Solarmodulhalteelements vorteilhaft zwei Solarmodule an den Grundträger angebunden, insbesondere vormontiert, werden.

Des Weiteren wird vorgeschlagen, dass das Solarmodulhalteelement als ein U-förmig geformtes plattenartiges Element ausgebildet ist, das an seinen Querenden jeweils ein Formschlusselement, insbesondere ein Hakenelement ausbildet. Das Solarmodulhalteelement ist vorzugsweise von einem Metallblech gebildet. Vorzugsweise ist das Solarmodulhalteelement als ein Blechbiegebauteil ausgebildet. Das Solarmodulhalteelement bildet seinen Grundträger, seine Wandungen, sowie die Formschlusselemente einstückig miteinander aus. Dadurch kann das Solarmodulhalteelement besonders einfach und kostengünstig ausgebildet werde.

Zudem wird vorgeschlagen, dass die Solarmodulhaltevorrichtung wenigstens zwei unterschiedliche Solarmodulhalteelemente aufweist, die unterschiedliche Formschlusselemente zur Anbindung unterschiedlicher Solarmodule aufweisen, wobei die unterschiedlichen Solarmodulhalteelemente dazu vorgesehen sind, wahlweise über die wenigstens eine Halteelementaufnahme mit dem Grundträger verbunden zu werden. Unter zwei unterschiedlichen Solarmodulhalteelementen sollen vorzugsweise unterschiedlich ausgebildete Solarmodulhalteelemente verstanden werden, die insbesondere zueinander unterschiedliche Formschlusselemente oder Anordnungen der Formschlusselemente aufweisen. Die Formschlussbereiche der unterschiedlichen Solarmodulhalteelemente zur Anbindung an eine Halteelementaufnahme eines Grundträgers sind vorzugsweise identisch ausgebildet, sodass alle Solarmodulhalteelemente über eine gleich ausgebildete Halteelementaufnahme mit einem Grundträger verbindbar sind. Zur Anbindung unterschiedlicher Solarmodule können alternativ unterschiedliche Solarmodulhalteelemente mit einer Halteelementaufnahme verbunden werden. Dabei kann jeweils nur ein Solarmodulhalteelement in einer Halteelementaufnahme angeordnet werden. Dadurch kann besonders vorteilhaft eine Variable Solarmodulhaltevorrichtung bereitgestellt werden, in der einfach unterschiedliche Solarmodule, insbesondere unterschiedlich große Solarmodule oder Solarmodule mit unterschiedlich angeordneten Befestigungsausnehmungen an einen Grundkörper angebunden werden.

Ferner wird vorgeschlagen, dass das Grundgestell ein rotierbar gelagertes Befestigungsrohr aufweist, über das Solarmodule sonnenstandfolgend auf einem Untergrund montierbar sind. Unter einem "rotierbar gelagerten Befestigungsrohr" soll vorzugsweise ein Befestigungsrohr verstanden werden, das um seine Rotationsachse rotierbar gelagert ist und zur Ausrichtung der Solarmodule in Richtung des Sonnenstands rotierbar ist. Das rotierbar gelagerte Befestigungsrohr ist vorzugsweise mittels einer Antriebseinheit, insbesondere einem Elektromotor, antreibbar. Dadurch kann vorteilhaft eine sonnenstandfolgende Anbindung der Solarmodule bereitgestellt werden.

Es wird weiterhin vorgeschlagen, dass der Grundträger zumindest zwei unterschiedliche Befestigungsbereiche ausbildet, über die zumindest ein Solarmodul betriebssicher an den Grundträger montierbar ist. Unter einem "Befestigungsbereich" soll vorzugsweise ein Bereich verstanden werden, über den ein Solarmodul betriebssicher über ein Befestigungsmittel, wie beispielsweise eine Klemme oder ein Schraubenelement fest mit dem Grundkörper verbindbar ist. Über die Befestigungsbereiche ist ein Solarmodul verliersicher an dem Grundkörper gesichert. Dadurch kann der Grundträger besonderes variabel zur Anbindung unterschiedlicher Solarmodule ausgebildet werden.

Die erfindungsgemäße Solarmodulhaltevorrichtung soll hierbei nicht auf die oben beschriebene Anwendung und Ausführungsform beschränkt sein. Insbesondere kann die erfindungsgemäße Solarmodulhaltevorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Teils eines Solarmodulsystems mit einer erfindungsgemäßen Solarmodulhaltevorrichtung in einem ersten Ausführungsbeispiel,
- Fig. 2: eine schematische Darstellung der Solarmodulhaltevorrichtung von unten mit einem drehbar gelagerten Befestigungsrohr und über Grundträger an dem Befestigungsrohr angebrachten Solarmodulen,
- Fig. 3: eine schematische Ansicht eines Teils des Befestigungsrohrs und daran über Grundträger befestigte Solarmodule von oben,
- Fig. 4: eine schematische Darstellung eines Grundträgers mit einer Halteelementaufnahme und einem in der Halteelementaufnahme angeordneten Solarmodulhaltemoduls mit zwei Formschlusselementen,
- Fig. 5: eine weitere schematische Darstellung eines Grundträgers mit einer Halteelementaufnahme und einem in der Halteelementaufnahme angeordneten Solarmodulhaltemoduls in einer anderen Ansicht,
- Fig. 6: eine schematische Ansicht auf den Grundträger in Längsrichtung mit einem in der Halteelementaufnahme angeordneten Solarmodulhalteelement,
- Fig. 7: eine schematische Draufsicht auf den Grundträger mit einem in der Halteelementaufnahme angeordneten Solarmodulhalteelement,
- Fig. 8: eine schematische Ansicht eines Solarmodulhalteelements,
- Fig. 9: eine schematische Draufsicht auf drei unterschiedliche Solarmodulhalteelemente mit unterschiedlich angeordneten Formschlusselementen, und
- Fig. 10: eine schematische Darstellung eines Teils eines Solarmodulsystems mit einer erfindungsgemäßen Solarmodulhaltevorrichtung in einem zweiten Ausführungsbeispiel.

### Beschreibung der Ausführungsbeispiele

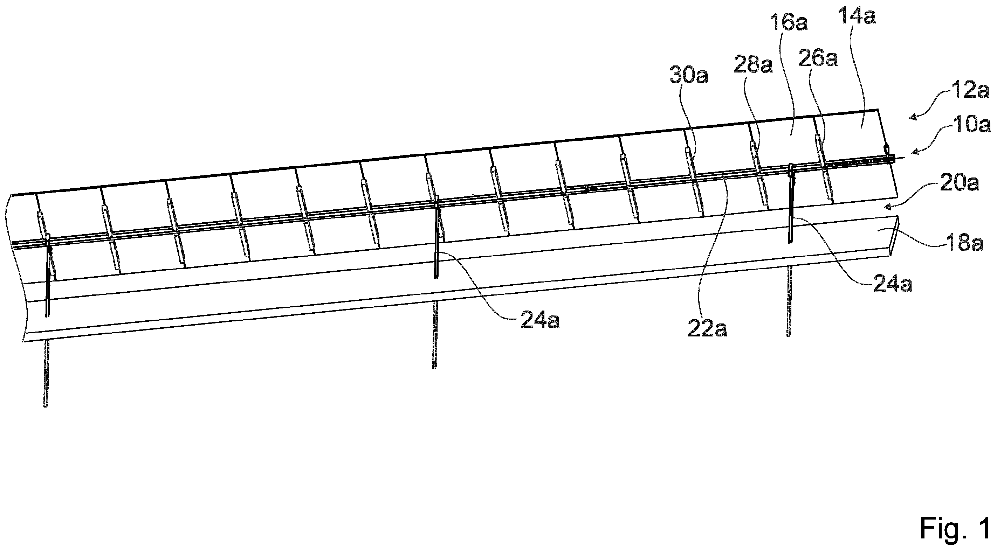

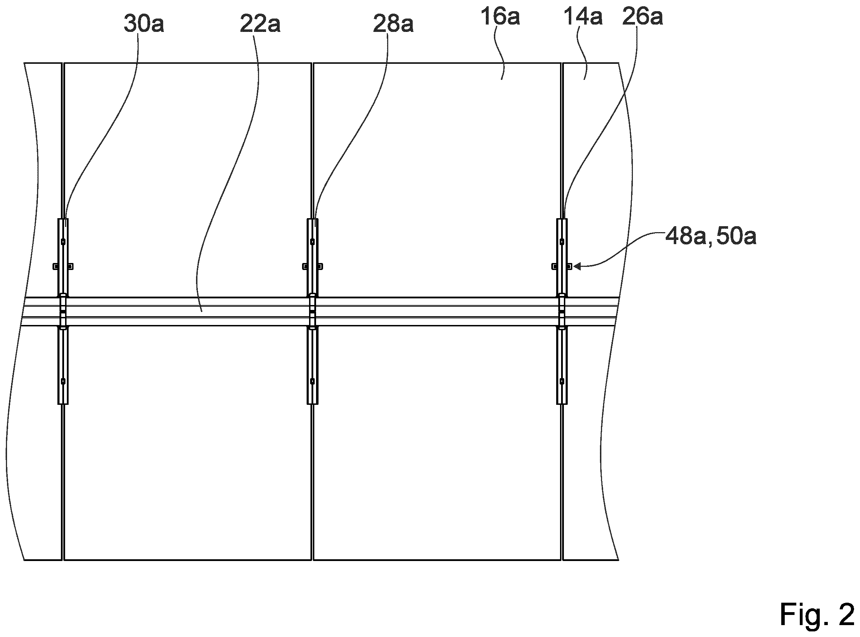

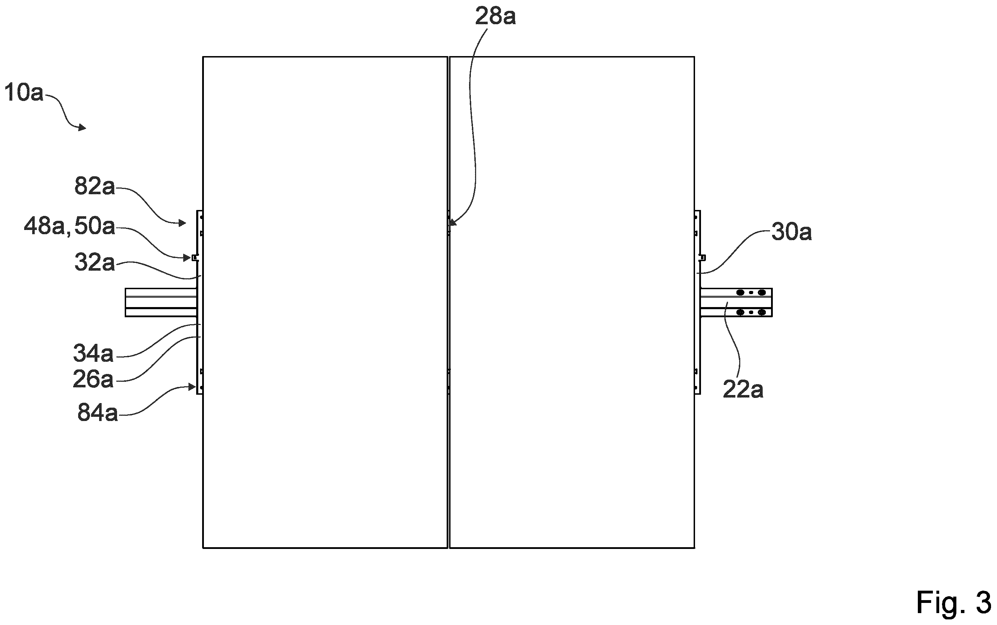

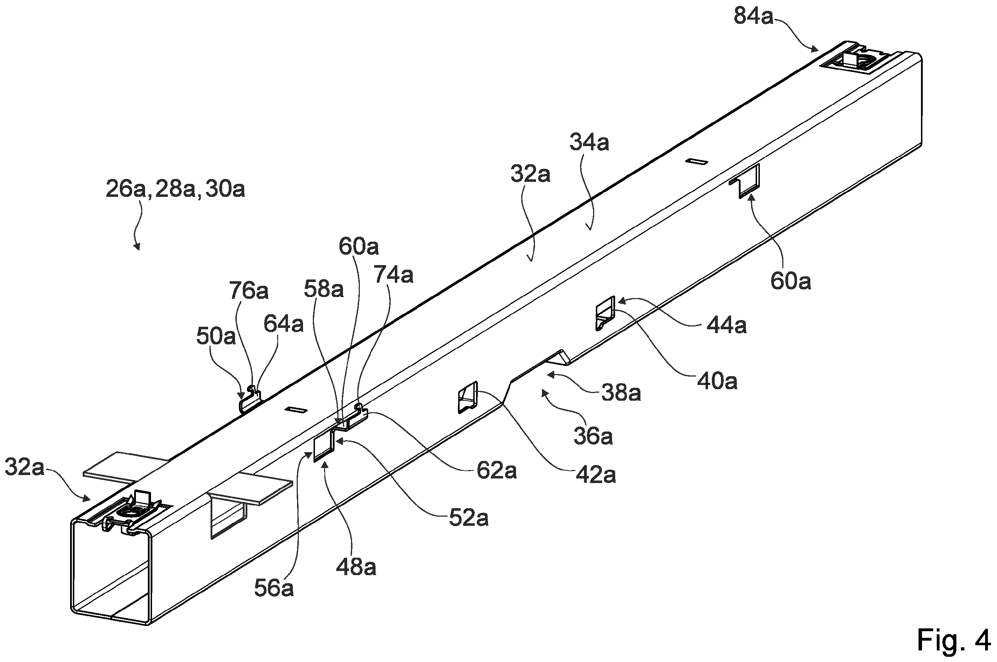

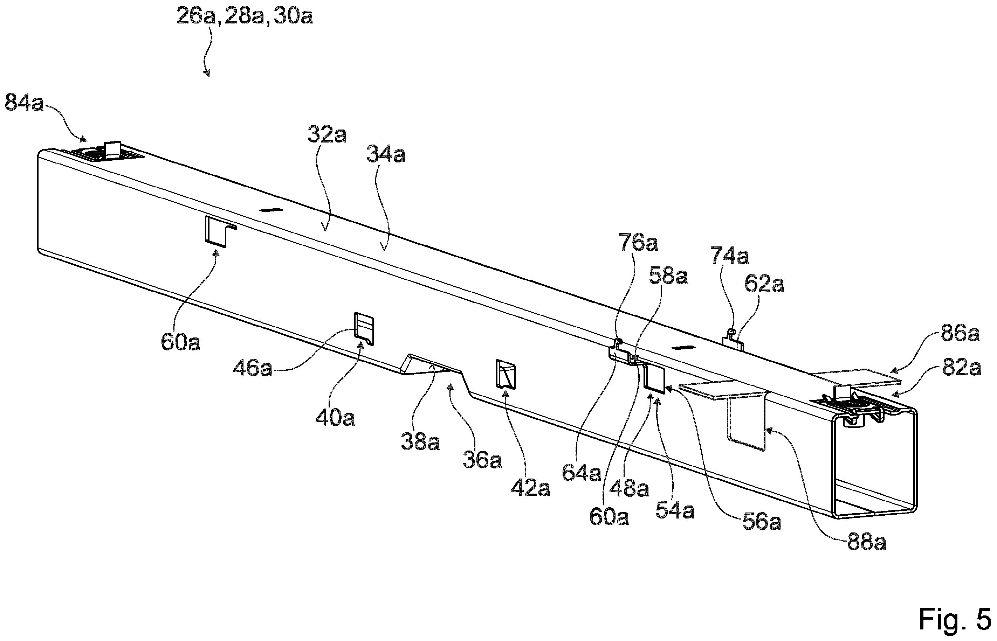

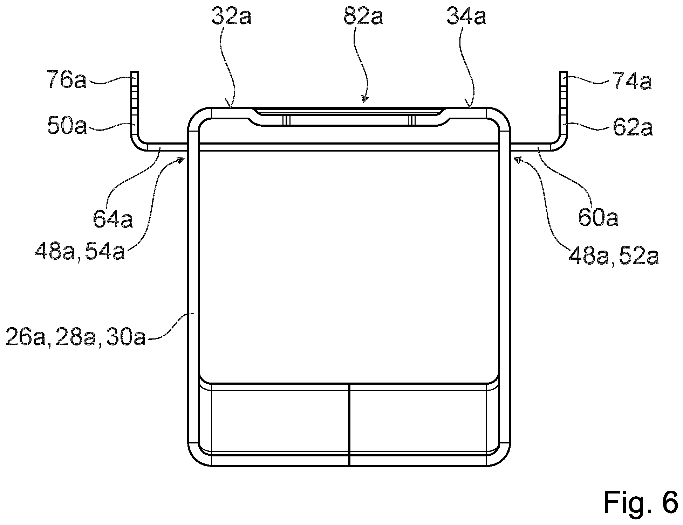

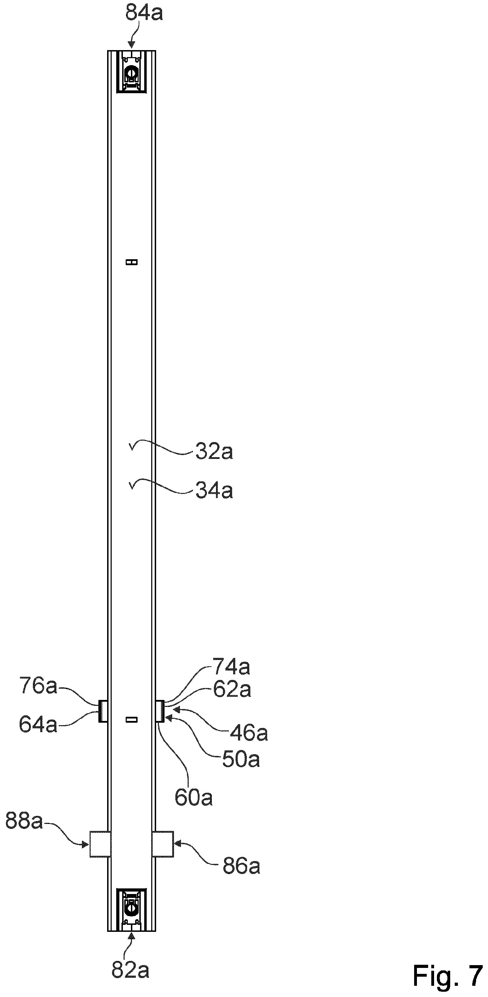

Die Figuren 1 bis 9 zeigen ein erstes Ausführungsbeispiel einer erfindungsgemäßen Solarmodulhaltevorrichtung 10a. Die Figur 1 zeigt einen Teil einer erfindungsgemäßen Solarmodulhaltevorrichtung 10a. In der Figur 1 ist ein Teil eines erfindungsgemäßen Solarmodulsystems 12a mit mehreren Solarmodulen 14a, 16a gezeigt. Die Solarmodulhaltevorrichtung 10a ist zur Montage von einer Vielzahl von Solarmodulen 14a, 16a auf einem Untergrund 18a vorgesehen. Die Solarmodulhaltevorrichtung 10a ist hier beispielhaft zur sonnenstandfolgenden Aufständerung der Solarmodule 14a, 16a vorgesehen. Die Solarmodulhaltevorrichtung 10a bildet eine Reihe aus, in der die Solarmodule 14a, 16a angeordnet werden. Die Solarmodulhaltevorrichtung 10a ist zur Aufständerung der Solarmodule 14a, 16a in einer Reihe vorgesehen. Die Solarmodulhaltevorrichtung 10a ist zur sonnenstandfolgenden Aufständerung der Solarmodule 14a, 16a auf dem Untergrund 18a vorgesehen. Die Solarmodulhaltevorrichtung 10a ist dazu vorgesehen, die Solarmodule 14a, 16a schwenkbar zu lagern. Die Figur 1 zeigt das Solarmodulsystem 12a aus einer, eine Reihe ausbildenden Solarmodulhaltevorrichtung 10a mit den an der Solarmodulhaltevorrichtung 10a befestigten Solarmodulen 14a, 16a. Die Figur 1 zeigt dabei nur beispielhaft eine Solarmodulhaltevorrichtung 10a. Das Solarmodulsystem 12a weist vorzugsweise eine Vielzahl von nebeneinander angeordneten Solarmodulhaltevorrichtungen 10a mit weiteren Solarmodulen 14a, 16a auf, die zu einem Solarpark zusammengeschlossen sind.

Die Solarmodulhaltevorrichtung 10a weist ein Grundgestell 20a auf. Das Grundgestell 20a ist zur Anbindung der Solarmodule 14a, 16a an den Untergrund 18a vorgesehen. Das Grundgestell 20a ist zur sonnenstandfolgenden Lagerung der Solarmodule 14a, 16a vorgesehen. Über das Grundgestell 20a sind die Solarmodule 14a, 16a schwenkbar an dem Untergrund 18a angebracht. Das Grundgestell 20a weist ein rotierbar gelagertes Befestigungsrohr 22a auf, über das die Solarmodule 14a, 16a sonnenstandfolgend auf einem Untergrund 18a montierbar sind. Das Befestigungsrohr 22a ist als eine durchgehende Achse ausgebildet. Das Befestigungsrohr 22a weist vorzugsweise eine Außenkontur auf, die als ein Oktagon ausgebildet ist. Der Außenquerschnitt des Befestigungsrohrs 22a ist als ein Oktagon ausgebildet. Das Befestigungsrohr 22a ist vorzugsweise als ein Oktagon-Hohlzylinder ausgebildet. Das Befestigungsrohr 22a ist vorzugsweise aus einem Metall gebildet. Beispielsweise ist das Befestigungsrohr 22a aus einem Stahl gebildet. Grundsätzlich ist es auch denkbar, dass das Befestigungsrohr 22a aus einem anderen Material gebildet ist. Vorzugsweise weist das Befestigungsrohr 22a einen Außendurchmesser von etwa 13 cm auf. Grundsätzlich ist es denkbar, dass das Befestigungsrohr 22a einen Außendurchmesser aufweist, der vorzugsweise in einem Bereich von 10 cm bis 20 cm liegt. Die Solarmodulhaltevorrichtung 10a weist eine nicht näher dargestellte Antriebseinheit auf, die zum Antrieb, insbesondere zur Verstellung des Befestigungsrohrs 22a, vorgesehen ist. Die Antriebseinheit ist vorzugsweise als ein Elektromotor ausgebildet. Mittels der Antriebseinheit ist das Befestigungsrohr 22a und damit die daran befestigten Solarmodule 14a, 16a verschwenkbar und können so immer optimal in Richtung Sonne ausgerichtet werden. Das Grundgestell 20a weist mehrere in Reihe angeordnete Stützelemente 24a auf, die mit dem Untergrund 18a fest verbunden sind. Beispielhaft sind die Stützelemente 24a als Rammprofile ausgebildet, die in den Untergrund 18a eingebracht sind. Über die Stützelemente 24a ist das Grundgestell 20a fest an dem Untergrund 18a angebunden. Das Befestigungsrohr 22a ist drehbar an die Stützelemente 24a gelagert. Vorzugsweise ist das Befestigungsrohr 20a an einem oberen Ende der Stützelemente 24a über ein Lager drehbar gelagert.

Die Solarmodulhaltevorrichtung 10a weist einen Grundträger 26a auf. Der Grundträger 26a ist zur teilweisen Anbindung von zumindest einem Solarmodul 14a, 16a vorgesehen. Die Solarmodulhaltevorrichtung 10a weist einen weiteren Grundträger 28a auf. Der weitere Grundträger 28a ist zur teilweisen Anbindung eines Solarmoduls 14a, 16a vorgesehen. Die Solarmodulhaltevorrichtung 10a weist eine Vielzahl von Grundträgern 26a, 28a, 30a auf. Vorzugsweise weist die Solarmodulhaltevorrichtung 10a einen Grundträger 26a, 28a, 30a mehr auf, als Solarmodule 14a, 16a an die Solarmodulhaltevorrichtung 10a angebunden sind. An einem Grundträger 26a, 28a, 30a sind vorzugsweise jeweils zwei direkt nebeneinander angeordnete Solarmodule 14a, 16a anbindbar. Die Grundträger 26a, 28a sind jeweils dazu vorgesehen, ein Solarmodul 14a, 16a in einem seitlichen Bereich anzubinden. Ein Solarmodul 14a, 16a ist jeweils über zwei benachbart angeordnete Grundträger 26a, 28a angebunden. Die Grundträger 26a, 28a, 30a sind dabei beabstandet zueinander angeordnet. Die Grundträger 26a, 28a, 30a sind jeweils direkt mit dem Befestigungsrohr 22a verbunden. Die Grundträger 26a, 28a, 30a sind drehfest an dem Befestigungsrohr 22a angebunden. Die Grundträger 26a, 28a, 30a der Solarmodulhaltevorrichtung 10a sind jeweils identisch ausgebildet. Im Folgenden soll deshalb nur der eine Grundträger 26a näher beschrieben werden. Die folgende Beschreibung des einen Grundträgers 26a kann dabei zur Erläuterung der anderen Grundträger 28a, 30a der Solarmodulhaltevorrichtung 10a herangezogen werden.

Der Grundträger 26a ist als ein Profilrohr ausgebildet. Der Grundträger 26a ist vorzugsweise aus einem Metall, insbesondere einem Stahl gebildet. Grundsätzlich wäre es auch denkbar, dass der Grundträger 26a aus einem anderen Material gebildet ist. Der Grundträger 26a ist vorzugsweise als ein Blechbiegebauteil ausgebildet. Der Grundträger 26a weist vorzugsweise einen geschlossenen Querschnitt auf. Der Grundträger 26a weist vorzugsweise insbesondere mit Ausnahme von im Folgenden beschriebenen Ausnehmungen, insbesondere Befestigungsausnehmungen, einen geschlossenen Querschnitt auf. Grundsätzlich wäre es auch denkbar, dass der Grundträger 26a beispielsweise an einer Unterseite einen Schlitz aufweist. Der Grundträger 26a weist einen im Wesentlichen rechteckigen Querschnitt auf. Der Grundträger 26a weist über einen Großteil seiner Längserstreckung einen rechteckigen Querschnitt auf. Der Grundträger 26a bildet eine im Wesentlichen ebene Oberseite 32a aus. Der Grundträger 26a bildet auf seiner Oberseite 32a eine Auflagefläche 34a aus. Die Auflagefläche 34a ist dazu vorgesehen, dass zumindest ein, vorzugsweise zwei benachbarte Solarmodule 14a, 16a mit ihrer Rückseite, insbesondere mit einem Randbereich darauf aufliegen können. Der Grundträger 26a weist eine Befestigungsrohranbindung 36a auf. Über die Befestigungsrohranbindung 36a ist der Grundträger 30a an das Befestigungsrohr 22a angebunden. Die Befestigungsrohranbindung 36a ist in einer Längserstreckung des Grundträgers 30a vorzugsweise mittig angeordnet. Die Befestigungsrohranbindung 36a bildet auf der Unterseite des Grundträgers 36a eine Vertiefung 38a aus. Vorzugsweise ist der Grundträger 36a im Bereich der Vertiefung 38a der Befestigungsrohranbindung 36a verstärkt ausgebildet, insbesondere durch eine dickere Wandstärke im Bereich der Vertiefung 38a. Vorzugsweise kann die dickere Wandstärke im Bereich der Vertiefung 38a in dem Herstellungsverfahren eingestellt werden. Die Befestigungsrohranbindung 36a weist zwei Befestigungsaufnahmen 40a, 42a auf. Über die Befestigungsaufnahmen 40a, 42a ist der Grundträger 26a über ein Befestigungsmittel mit dem Befestigungsrohr 22a verbunden. Die Befestigungsaufnahmen 40a, 42a, sind jeweils von zwei in den gegenüberliegenden Seitenwandungen des Grundträgers 26a eingebrachte Ausnehmungen 44a, 46a ausgebildet. Die Ausnehmungen 44a, 46a, die eine Befestigungsaufnahme 40a, 42a ausbilden, sind koaxial angeordnet. Die Ausnehmungen 44a, 46a, die eine Befestigungsaufnahme 40a, 42a ausbilden, sind rechteckig ausgebildet. Das Befestigungsmittel ist vorzugsweise als eine Schelle, insbesondere eine Metallschelle, ausgebildet. Die als Schelle ausgebildeten Befestigungsmittel sind zur Verbindung mit dem Befestigungsrohr 22a durch die Ausnehmungen 44a, 46a einer Befestigungsaufnahme 40a, 42a und um das Befestigungsrohr 22a geführt.

Der Grundträger 26a weist eine Halteelementaufnahme 48a auf. Die Halteelementaufnahme 48a ist in einer Längsrichtung des Grundträgers 26a außermittig angeordnet. Die Halteelementaufnahme 48a ist zur positionsfesten Aufnahme eines Solarmodulhalteelements 50a vorgesehen, das zur Halterung zumindest eines Solarmoduls 14a, 16a über die Halteelementaufnahme 48a vorgesehen ist. Über die Halteelementaufnahme 48a ist ein Solarmodul 14a, 16a über ein Solarmodulhalteelement 50a fest mit dem Grundträger 26a verbindbar. Die Halteelementaufnahme 48a ist zur formschlüssigen Anbindung eines Solarmodulhalteelements 50a vorgesehen. Die Halteelementaufnahme 48a ist vorzugsweise zur werkzeuglosen Anbindung eines Solarmodulhalteelements 50a vorgesehen. Die Halteelementaufnahme 48a ist zur reinen Steckverbindung eines Solarmodulhalteelements 50a vorgesehen. Die Halteelementaufnahme 48a bildet eine erste Ausnehmung 52a in dem Grundträger 26a aus. Die Halteelementaufnahme 48a bildet eine zweite Ausnehmung 54a in dem Grundträger 26a aus. Die Ausnehmungen 52a, 54a sind vorzugsweise in zwei gegenüberliegenden Seitenwandungen des Grundträgers 26a eingebracht. Die beiden Ausnehmungen 52a, 54a, die die Halteelementaufnahme 48a ausbilden, sind koaxial zueinander angeordnet.

Die Ausnehmungen 52a, 54a, die die Halteelementaufnahme 48a ausbilden, weisen einen unrunden Querschnitt auf. Die Halteelementaufnahme 48a bildet einen Einführbereich 56a aus. Die Ausnehmungen 52a, 54a, die die Halteelementaufnahme 48a ausbilden, bilden jeweils den Einführbereich 56a aus. In dem Einführbereich 56a sind die Ausnehmungen 52a, 54a, die die Halteelementaufnahme 48a ausbilden, rechteckig ausgebildet und weisen eine Breite auf, die etwas breiter ist als ein einzuführendes Solarmodulhalteelement 50a. Die Halteelementaufnahme 48a bildet einen Haltebereich 58a aus. Die Ausnehmungen 52a, 54a, die die Halteelementaufnahme 48a ausbilden, bilden den Haltebereich 58a aus. Der Haltebereich 58a ist dazu vorgesehen, dass ein Solarmodulhalteelement 50a darin formschlüssig angebracht werden kann. In dem Haltebereich 58a ist ein Solarmodulhalteelement 50a zur Halterung eines Solarmoduls 14a, 16a formschlüssig fixierbar. Der Haltebereich 58a erstreckt sich an einem oberen Ende des Einführbereichs 56a in Richtung einer Mitte des Grundträgers 26a, also in Richtung der Befestigungsrohranbindung 36a. In dem Haltebereich 58a weisen die Ausnehmungen 52a, 54a jeweils eine Höhe auf, die etwas größer ist als eine Dicke eines Solarmodulhalteelements 50a. Die Ausnehmungen 52a, 54a weisen in ihrem Haltebereich 58a eine Höhe auf, dass ein Solarmodulhalteelement 50a darin eingebracht werden kann.

Vorzugsweise weist der Grundträger 26a eine zweite Halteelementaufnahme 66a auf. Die weitere Halteelementaufnahme 66a ist vorzugsweise identisch zu der ersten Halteelementaufnahme 48a angeordnet. Die zweite Halteelementaufnahme 66a ist auf einer der ersten Halteelementaufnahme 48a gegenüberliegenden Längsseite des Grundträgers 26a angeordnet. Die zweite Halteelementaufnahme 66a ist auf einer der mittig angeordneten Befestigungsrohranbindung 36a der ersten Halteelementaufnahme 48a gegenüberliegend angeordnet. Die zweite Halteelementaufnahme 66a ist auf einer, einer Mittelquerachse des Grundträgers 26a gegenüberliegenden Seite zu der ersten Halteelementaufnahme 48a angeordnet. Vorzugsweise weist die zweite Halteelementaufnahme 66a einen anderen Abstand zu der Mittelquerachse des Grundträgers 26a auf als die erste Halteelementaufnahme 48a. Dadurch können vorteilhaft je nach Ausrichtung des Grundträgers 26a Solarmodule 14a, 16a mit unterschiedlich angeordneten Befestigungslöchern über in der entsprechenden Halteelementaufnahme 48a, 60a angeordnete Solarmodulhalteelemente 50a angebunden werden. Grundsätzlich wäre es auch denkbar, dass die zweite Halteelementaufnahme 66a einen gleichen Abstand zu der Mittelquerachse aufweist, wie die erste Halteelementaufnahme 48a. Dadurch könnte eine Montage erleichtert werden, da der Grundträger 26a in beiden Ausrichtungen mit dem Befestigungsrohr 22a verbindbar ist.

Die Solarmodulhaltevorrichtung 10a weist das Solarmodulhalteelement 50a auf. Das Solarmodulhalteelement 50a ist vorzugsweise zur formschlüssigen Anbindung an der Halteelementaufnahme 48a, 60a vorgesehen. Das Solarmodulhalteelement 50a ist zur formschlüssigen Anbindung wenigstens eines Solarmoduls 14a, 16a vorgesehen. Vorzugsweise ist das Solarmodulhalteelement 50a zur formschlüssigen Halterung von zwei Solarmodulen 14a, 16a vorgesehen. Das Solarmodulhalteelement 50a ist insbesondere zur Vormontage der Solarmodule 14a, 16a an dem Grundträger 26a vorgesehen. Mittels dem an der Halteelementaufnahme 48a, 60a angebundenen Solarmodulhalteelement 50a sind die zwei unmittelbar nebeneinander angeordneten Solarmodule 14a, 16a positionssicher an dem Grundträger 26a vormontierbar.

Das Solarmodulhalteelement 50a ist von einem plattenförmigen Element gebildet. Das Solarmodulhalteelement 50a weist eine Grundplatte 60a auf. Die Grundplatte 60a bildet einen ebenen Hauptteil des Solarmodulhalteelements 50a aus. Die Grundplatte 60a weist eine im Wesentlichen rechteckige Form auf. Das Solarmodulhalteelement 50a weist an den beiden gegenüberliegenden Querenden der Grundplatte 60a jeweils eine sich nach oben erstreckende Wandung 62a, 64a auf. Die Wandungen 62a, 64a sind vorzugsweise um 90 Grad zu der Grundplatte 60a ausgerichtet. Die Wandungen 62a, 64a sind vorzugsweise um 90 Grad von der Grundplatte 60a umgebogen. Das Solarmodulhalteelement 50a ist vorzugsweise im Wesentlichen U-förmig ausgebildet. Die Grundplatte 50a und die seitlich angeordneten Wandungen 62a, 64a bilden die U-Form aus. Grundsätzlich wäre es auch denkbar, dass die seitlichen Wandungen 62a, 64a in einem anderen Winkel zwischen 90 Grad und 75 Grad zu der Grundplatte 60a ausgerichtet sind und das Solarmodulhalteelement 50a im Wesentlichen eine V-Form ausbildet.

Das Solarmodulhalteelement 50a weist einen Formschlussbereich 68a auf. Mit dem Formschlussbereich 68a ist das Solarmodulhalteelement 50a formschlüssig in der wenigstens einen Halteelementaufnahme 48a, 66a kraft- und/oder formschlüssig befestigbar. Vorzugsweise ist das Solarmodulhalteelement 50a über seinen Formschlussbereich 68a lediglich formschlüssig in dem Haltebereich 58a der Halteelementaufnahme 48a gehalten. Grundsätzlich wäre es aber auch denkbar, dass das Solarmodulhalteelement 50a über seinen Formschlussbereich 68a in dem Haltebereich 58a der Halteelementaufnahme 48a eingeklemmt wird, also auch kraftschlüssig gekoppelt wird. Der Formschlussbereich 68a ist von der Grundplatte 60a gebildet. Der Formschlussbereich 68a weist zwei schlitzförmige Befestigungsausnehmungen 70a, 72a auf, die korrespondierend zu den Seitenwandungen des Grundträgers 26a ausgebildet sind. Die schlitzförmigen Befestigungsausnehmungen 70a, 72a weisen einen gleichen Abstand zueinander auf, wie die Seitenwandungen des Grundträgers 26a. Die schlitzförmigen Befestigungsausnehmungen 70a, 72a weisen eine Breite auf, die im Wesentlichen einer Dicke der Seitenwandungen entspricht, insbesondere minimal größer sind. Die schlitzförmigen Befestigungsausnehmungen 70a, 72a sind dazu vorgesehen, die Seitenwandungen des Grundträgers 26a in einem montierten Zustand in einem Bereich des Haltebereichs 58a der Halteelementaufnahme 48a, 66a zu umschließen. Ein Teilbereich hinter den schlitzförmigen Befestigungsausnehmungen 70a, 72a liegt in einem montierten Zustand in dem Haltebereich 58a der Halteelementaufnahme 48a auf.

Das Solarmodulhalteelement 50a weist ein erstes Formschlusselement 74a auf, das zur formschlüssigen Verbindung mit einem Solarmodul 14a, 16a vorgesehen ist. Das Formschlusselement 74a ist als ein Hakenelement ausgebildet. Das Solarmodulhalteelement 50a weist ein zweites Formschlusselement 76a auf, das zur formschlüssigen Verbindung mit einem Solarmodul 14a, 16a vorgesehen ist. Das zweite Formschlusselement 76a ist als ein Hakenelement ausgebildet. Das Solarmodulhalteelement 50a weist die zwei Formschlusselemente 74a, 76a auf um die beiden direkt nebeneinander angeordneten Solarmodule 14a, 16a formschlüssig anzubinden. Grundsätzlich wäre es auch denkbar, dass ein Solarmodulhalteelement 50a lediglich ein Formschlusselement aufweist und demnach nur zur Anbindung eines Solarmoduls 14a, 16a vorgesehen ist. Die Formschlusselemente 74a, 76a sind in einem an dem Grundträger 26a befestigten Zustand in Querrichtung auf gegenüberliegenden Seiten des Grundträgers 26a angeordnet. Die Formschlusselemente 74a, 76a stehen in einem an dem Grundträger 26a befestigten Zustand in Querrichtung über die gegenüberliegenden Seitenwandungen des Grundträgers 26a hinaus. Die Formschlusselemente 74a, 76a sind in einem mit dem Grundträger 26a verbundenen Zustand in Querrichtung seitlich von der jeweiligen Seitenwandung des Grundträgers 26a beabstandet angeordnet. Die Formschlusselemente 74a, 76a ragen in einem in der Halteelementaufnahme 48a, 66a an dem Grundträger 26a montierten Zustand über eine Oberseite 32a, also über die Auflagefläche 34a des Grundträgers 26a hinaus. Dadurch können die Formschlusselemente 74a, 76a in einem montierten Zustand formschlüssig mit Befestigungsöffnungen an einer Rückseite von auf der Auflagefläche 34a aufliegenden Solarmodulen 14a, 16a formschlüssig eingreifen.

Die Formschlusselemente 74a, 76a sind an den seitlichen Wandungen 62a, 64a des Solarmodulhalteelements 50a angeordnet. Das Formschlusselement 74a ist an der seitlichen Wandung 62a angeordnet. Das zweite Formschlusselement 76a ist an der seitlichen Wandung 64a angeordnet. Die zweiten Formschlusselemente 74a, 76a sind jeweils von der entsprechenden Wandung 62a, 64a des Solarmodulhalteelements 50a ausgebildet. Die Formschlusselemente 74a, 76a sind jeweils einstückig mit der entsprechenden Wandung 62a, 64a des Solarmodulhalteelements 50a ausgebildet. Die Formschlusselemente 74a, 76a sind an einem oberen Ende der Wandungen 62a, 64a angeordnet. Die Formschlusselemente 74a, 76a sind als Hakenelemente ausgebildet, die vorzugsweise eine Umbiegung von 90 Grad aufweisen. Die als Hakenelemente ausgebildeten Formschlusselemente 74a, 76a öffnen sich in eine Richtung, die einer Öffnungsrichtung der Befestigungsausnehmungen 70a, 72a des Formschlussbereichs 68a entgegengesetzt ist.

Das Solarmodulhalteelement 50a ist als ein U-förmig geformtes plattenartiges Element ausgebildet, das an seinen Querenden jeweils eines der Formschlusselemente 74a, 76a ausbildet. Das Solarmodulhalteelement 50a ist als ein Blechbiegebauteil ausgebildet. Das Solarmodulhalteelement 50a ist von einem Metallblech gebildet. Das Solarmodulhalteelement 50a bildet die Grundplatte 60a, die Wandungen 62a, 64a und die Formschlusselemente 76a, 74a vorzugsweise einstückig miteinander aus.

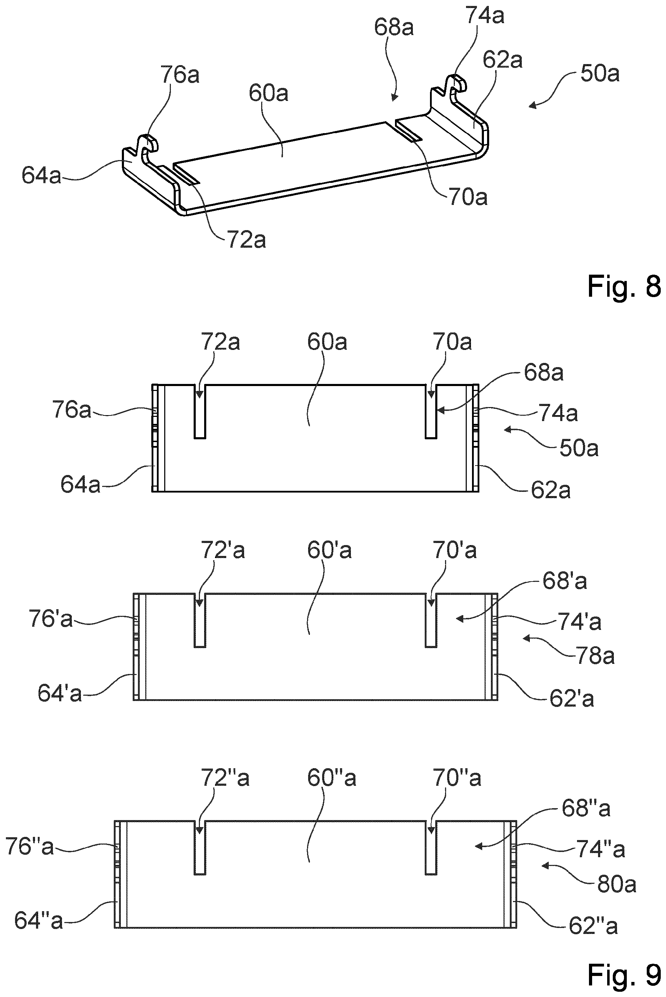

Die Halteelementaufnahme 48a, 66a des Grundträgers 26a ist zur positionsfesten Aufnahme von wenigstens zwei unterschiedlichen Solarmodulhalteelementen 50a, 78a, 80a vorgesehen. Die Solarmodulhaltevorrichtung 10a weist unterschiedliche Solarmodulhalteelemente 50a, 78a, 80a auf. Beispielhaft sind in der Figur 9 drei unterschiedliche Solarmodulhalteelemente 50a, 78a, 80a dargestellt. Die unterschiedlichen Solarmodulhalteelemente 50a, 78a, 80a sind zur Anbindung unterschiedlicher Solarmodule 14a, 16a wahlweise über die Halteelementaufnahme 48a, 60a form- und/oder kraftschlüssig mit dem Grundträger 26a verbindbar. Die unterschiedlichen Solarmodulhalteelemente 50a, 78a, 80a weisen einen identisch ausgebildeten Formschlussbereich 68a auf. Die unterschiedlichen Solarmodulhalteelemente 50a, 78a, 80a weisen jeweils einen gleich ausgebildeten Formschlussbereich 68a auf, der korrespondierend zu dem Haltebereich 58a der Halteelementaufnahme 48a, 66a ausgebildet ist. So können die unterschiedlichen Solarmodulhalteelemente 50a, 78a, 80a alle über ihre Formschlussbereiche 68a mit der Halteelementaufnahme 48a, 66a des Grundträgers 26a formschlüssig positionsfest verbunden werden.

Die unterschiedlichen Solarmodulhalteelemente 50a, 78a, 80a weisen unterschiedlich angeordnete Formschlusselemente 74a, 76a auf. Die Formschlusselemente 74a, 76a der unterschiedlichen Solarmodulhalteelemente 50a, 78a, 80a weisen unterschiedliche Abstände zu einer Mittelquerachse des jeweiligen Solarmodulhaltelements 50a, 78a, 80a auf. Dadurch stehen die Formschlusselemente 74a, 76a der unterschiedlichen Solarmodulhalteelemente 50a, 78a, 80a in einem in der Halteelementaufnahme 48a, 66a an dem Grundträger 26a montierten Zustand unterschiedlich weit über die seitliche Wandung hinaus. Dadurch können durch Verwendung unterschiedlicher Solarmodulelemente 50a, 78a, 80a einfach Solarmodule 14a, 16a mit unterschiedlich angeordneten Befestigungsöffnungen, insbesondere Solarmodule 14a, 16a, deren Befestigungslöcher einen unterschiedlichen Abstand in einer Querrichtung aufweisen, an dem Grundträger 26a angebunden werden. Grundsätzlich wäre es auch denkbar, dass die unterschiedlichen Solarmodulhalteelemente 50a, 78a, 80a zusätzlich oder alternativ zur unterschiedlichen Anordnung der Formschlusselemente 74a, 76a unterschiedlich ausgeformte Formschlusselemente 74a, 76a aufweisen. Beispielsweise wäre es denkbar, dass die Formschlusselemente 74a, 76a lediglich als Steckelemente ausgebildet sind, oder als Hakenelemente, die eine andere Form aufweisen.

Die unterschiedlichen Solarmodulhalteelemente 50a, 78a, 80a sind dazu vorgesehen, wahlweise, je nach zu befestigenden Solarmodulen 14a, 16a über die Halteelementaufnahme 48a, 66a mit dem entsprechenden Grundträger 26a, 28a, 30a verbunden zu werden. Vorzugsweise werden bei einem Solarmodulsystem 12a lediglich die gleichen Solarmodule 14a, 16a verwendet, sodass für die gesamte Solarmodulhaltevorrichtung 10a die gleichen Solarmodulhalteelemente 50a, 78a, 80a verwendet werden können. Für unterschiedliche Projekte, insbesondere für unterschiedliche Solarmodulsysteme, also unterschiedliche Solarparks, können unterschiedliche Solarmodule 14a, 16a verwendet werden, wobei eine Anpassung der Solarmodulhaltevorrichtung 10a durch Verwenden und einfaches formschlüssiges Verbinden der entsprechenden Solarmodulhalteelemente 50a, 78a, 80a in den Halteelementaufnahmen 48a, 66a der Grundträger 26a, 28a, 30a sehr einfach stattfinden kann. Die Grundträger 26a, 28a, 30a sind durch Anbringen eines entsprechenden Solarmodulhalteelements 50a, 78a, 80a einfach zur Halterung, insbesondere zur positionssicheren Vormontage von unterschiedlich ausgebildeten, insbesondere unterschiedlich großen Solarmodulen 14a, 16a anpassbar.

Der Grundträger 26a bildet vorzugsweise zumindest zwei unterschiedliche Befestigungsbereiche 82a, 84a, 86a, 88a aus. Die zwei Befestigungsbereiche 82a, 84a sind an gegenüberliegenden Längsenden des Grundträgers 26a angeordnet. Die zwei Befestigungsbereiche 82a, 84a sind auf einer Oberseite 32a des Grundträgers 26a angeordnet. Die zwei Befestigungsbereiche 82a, 84a bilden jeweils eine Vertiefung und ein Durchgangsloch mit einem Innengewinde aus. Das Durchgangsloch mit Innengewinde ist vorzugsweise von einer in dem Befestigungsbereich 82a, 84a fest angebundenen Mutter ausgebildet. Vorzugsweise ist die Mutter in dem jeweiligen Befestigungsbereich 82a, 84a eingepresst. Grundsätzlich wäre es auch denkbar, dass die Mutter über eine Halteklemme positionsfest in dem jeweiligen Befestigungsbereich 82a, 84a positionsfest gehalten ist. Die zwei Befestigungsbereiche 82a, 84a sind dazu vorgesehen, dass die zwei auf der Auflagefläche aufliegenden Solarmodule 14a, 16a über ein Befestigungselement fest und betriebssicher an dem Grundträger 26a montiert sind. Die Befestigungsmittel sind dabei beispielsweise als Klemmelemente ausgebildet, die von oben auf die Befestigungsbereiche 82a, 84a geschraubt werden und die Solarmodule 14a, 16a in ihrem Randbereich zwischen dem Befestigungsmittel und der Auflagefläche 34a einklemmen.

Die Befestigungsbereiche 86a, 88a sind von seitlich an den Seitenwandungen des Grundträgers 26a ausgeklappten Laschen ausgebildet. Die Befestigungsbereiche 86a, 88a sind dazu vorgesehen, dass ein Solarmodul 14a, 16a mittels eines Klemmelements fest und betriebssicher mit dem Grundträger 26a verbindbar ist. Ein Solarmodul 14a, 16a kann wahlweise über die Befestigungsbereiche 82a, 84a oder über die Befestigungsbereiche 86a, 88a betriebssicher an dem Grundträger 26a montiert werden.

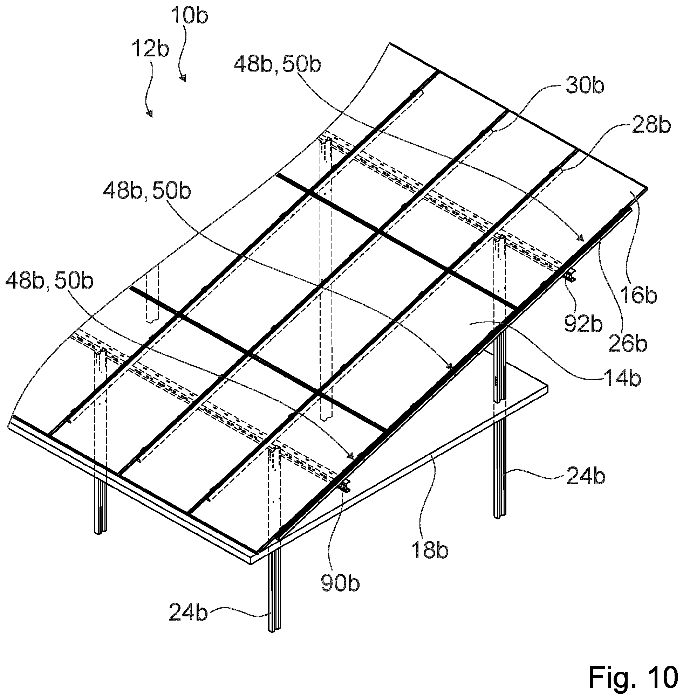

In der Figur 10 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 9, verwiesen werden kann. Zur Unterscheidung der Ausführungsbeispiele ist der Buchstabe a den Bezugszeichen des Ausführungsbeispiels in Fig. 1 bis 9 nachgestellt. In dem Ausführungsbeispiel der Figur 10 ist der Buchstabe a durch den Buchstaben b ersetzt.

Die Figur 10 zeigt ein zweites Ausführungsbeispiel einer erfindungsgemäßen Solarmodulhaltevorrichtung 10b. Die Figur 10 zeigt einen Teil einer erfindungsgemäßen Solarmodulhaltevorrichtung 10b. In der Figur 10 ist ein Teil eines erfindungsgemäßen Solarmodulsystems 12b mit mehreren Solarmodulen 14b, 16b gezeigt. Die Solarmodulhaltevorrichtung 10b ist im Unterschied zum ersten Ausführungsbeispiel zu einer festen Ausrichtung und Befestigung der Solarmodule 14b, 16b vorgesehen. Die Solarmodule 14b, 16b sind über die Solarmodulhaltevorrichtung 10b des zweiten Ausführungsbeispiels nicht sonnenstandfolgend aufgeständert. Die Solarmodulhaltevorrichtung 10b weist ein Grundgestell 20b auf. Das Grundgestell 20b ist zur Anbindung der Solarmodule 14b, 16b an einen Untergrund 18b vorgesehen. Das Grundgestell 20b ist zur positionsfesten Anbindung der Solarmodule 14b, 16b auf dem Untergrund 18b vorgesehen. Das Grundgestell 20b weist vorzugsweise zwei Reihen an Stützelementen 24b auf, die mit dem Untergrund 18b verbunden sind. Das Grundgestell 20b weist jeweils zwei Befestigungsträger 90b, 92b auf, die jeweils entlang einer Reihe an Stützelementen 24b in unterschiedlichen Höhen angeordnet sind. Die Befestigungsträger 90b, 92b verlaufen parallel zueinander. Die Solarmodulhaltevorrichtung 10b weist mehrere Grundträger 26b, 28b, 30b auf. Die Grundträger 26b, 28b, 30b sind zur Anbindung von mehreren Solarmodulen 14b, 16b vorgesehen. Im Unterschied zum ersten Ausführungsbeispiel sind über zwei Grundträger 26b, 28b, 30b mehrere Solarmodule 14b, 16b in einer Reihe hintereinander anbindbar. Dier Grundträger 26b, 28b, 30b sind als längliche Befestigungsschienen ausgebildet. An jedem Grundträger 26b, 28b, 30b sind drei Solarmodule 14b, 16b in Längsrichtung hintereinander anbindbar. Grundsätzlich wäre auch eine andere Anzahl an Solarmodulen 14b, 16b denkbar. Die Grundträger 26b, 28b, 30b weisen jeweils mehrere, insbesondere drei Halteelementaufnahmen 48b auf, an denen jeweils ein Solarmodulhalteelement 50b, 78b, 80b an den Grundträger 26b, 28b, 30b anbindbar ist. Die Ausgestaltung der Halteelementaufnahmen 48b, sowie der Solarmodulhalteelemente 50b, 78b, 80b ist dabei vorzugsweise gleich zu dem ersten Ausführungsbeispiel und soll hier nicht näher erläutert werden. Eine Beschreibung der entsprechenden Grundträger, Halteelementaufnahmen 48b, und Solarmodulhalteelemente 50b, 78b, 80b kann vorzugsweise von dem ersten Ausführungsbeispiel übernommen werden.

### Bezugszeichen

- 10: Solarmodulhaltevorrichtung
- 12: Solarmodulsystem
- 14: Solarmodul
- 16: Solarmodul
- 18: Untergrund
- 20: Grundgestell
- 22: Befestigungsrohr
- 24: Stützelement
- 26: Grundträger
- 28: Grundträger
- 30: Grundträger
- 32: Oberseite
- 34: Auflagefläche
- 36: Befestigungsrohranbindung
- 38: Vertiefung
- 40: Befestigungsaufnahme
- 42: Befestigungsaufnahme
- 44: Ausnehmung
- 46: Ausnehmung
- 48: Halteelementaufnahme
- 50: Solarmodulhalteelement
- 52: Ausnehmung
- 54: Ausnehmung
- 56: Einführbereich
- 58: Haltebereich
- 60: Grundplatte
- 62: Wandung
- 64: Wandung
- 66: Halteelementaufnahme
- 68: Formschlussbereich
- 70: Befestigungsausnehmung
- 72: Befestigungsausnehmung
- 74: Formschlusselement
- 76: Formschlusselement
- 78: Solarmodulhalteelement
- 80: Solarmodulhalteelement
- 82: Befestigungsbereich
- 84: Befestigungsbereich
- 86: Befestigungsbereich
- 88: Befestigungsbereich
- 90: Befestigungsträger
- 92: Befestigungsträger

## Patentansprüche

1. Solarmodulhaltevorrichtung zur Montage zumindest eines Solarmoduls (14a, 16a; 14a, 16b), mit einem Grundgestell (20a; 20b) zur Anbindung des zumindest einen Solarmoduls (14a, 16a; 14a, 16b) an einen Untergrund (18a; 18b), und mit einem Grundträger (26a, 28a; 26b, 28b), der zumindest zur teilweisen Anbindung des zumindest einen Solarmoduls (14a, 16a; 14a, 16b) an das Grundgestell (20a; 20b) vorgesehen ist, und der eine Auflagefläche (34a; 34b) für ein Solarmodul (14a, 16a; 14a, 16b) ausbildet, wobei der Grundträger (26a, 28a; 26b, 28b) als ein Profilrohr ausgebildet ist, **dadurch gekennzeichnet, dass** der Grundträger (26a, 28a; 26b, 28b) wenigstens eine Halteelementaufnahme (48a, 66a; 48b, 66b) aufweist, die zur positionsfesten Aufnahme eines Solarmodulhalteelements (50a; 50b, 78b, 80b) vorgesehen ist, das zur Halterung zumindest eines Solarmoduls (14a, 16a; 14a, 16b) über die Halteelementaufnahme (48a, 66a; 48b, 66b) fest mit dem Grundträger (26a, 28a; 26b, 28b) verbindbar ist.

2. Solarmodulhaltevorrichtung nach Anspruch 1, **dadurch gekennzeichnet, dass** die Halteelementaufnahme (48a, 66a; 48b, 66b) des Grundträgers (26a, 28a; 26b, 28b) zur positionsfesten Aufnahme von wenigstens zwei unterschiedlichen Solarmodulhalteelementen (50a; 50b, 78b, 80b) vorgesehen ist, die zur Anbindung unterschiedlicher Solarmodule (14a, 16a; 14a, 16b) wahlweise über die Halteelementaufnahme (48a, 66a; 48b, 66b) form- und/oder kraftschlüssig mit dem Grundträger (26a, 28a; 26b, 28b) verbindbar sind.

3. Solarmodulhaltevorrichtung nach Anspruch 1 oder 2, **dadurch gekennzeichnet, dass** der Grundträger (26a, 28a; 26b, 28b) zur Befestigung eines Solarmoduls (14a, 16a; 14a, 16b) zumindest die eine Halteelementaufnahme (48a, 66a; 48b, 66b) aufweist, in die zur Halterung zumindest eines Solarmoduls (14a, 16a; 14a, 16b) ein Solarmodulhalteelement (50a; 50b, 78b, 80b) form- und/oder kraftschlüssig angebunden ist.

4. Solarmodulhaltevorrichtung nach einem der vorhergehenden Ansprüche, **dadurch gekennzeichnet, dass** die wenigstens eine Halteelementaufnahme (48a, 66a; 48b, 66b) eine Ausnehmung (44a, 46a; 44b, 46b) in dem Grundträger (26a, 28a; 26b, 28b) ausbildet, die einen unrunden Querschnitt aufweist.

5. Solarmodulhaltevorrichtung nach einem der vorhergehenden Ansprüche, **dadurch gekennzeichnet, dass** die wenigstens eine Halteelementaufnahme (48a, 66a; 48b, 66b) eine in einer Seitenwandung des Grundträgers (26a, 28a; 26b, 28b) angeordnete Ausnehmung (44a, 46a; 44b, 46b) ausbildet.

6. Solarmodulhaltevorrichtung nach einem der vorhergehenden Ansprüche, **dadurch gekennzeichnet, dass** die wenigstens eine Halteelementaufnahme (48a, 66a; 48b, 66b) wenigstens einen Einführbereich (56a; 56b), über den ein Solarmodulhalteelement (50a; 50b, 78b, 80b) in die Halteelementaufnahme (48a, 66a; 48b, 66b) einführbar ist, und einen Haltebereich (58a; 58b) ausbildet, in dem ein Solarmodulhalteelement (50a; 50b, 78b, 80b) zur Halterung eines Solarmoduls (14a, 16a; 14a, 16b) formschlüssig fixierbar ist.

7. Solarmodulhaltevorrichtung nach einem der vorhergehenden Ansprüche, **dadurch gekennzeichnet, dass** die Halteelementaufnahme (48a, 66a; 48b, 66b) zwei koaxial zueinander angeordnete Ausnehmungen (44a, 46a; 44b, 46b) ausbildet, die in gegenüberliegende Seitenwandungen des Grundträgers (26a, 28a; 26b, 28b) eingebracht sind.

8. Solarmodulhaltevorrichtung nach einem der vorhergehenden Ansprüche, **gekennzeichnet durch** wenigstens ein Solarmodulhalteelement (50a; 50b, 78b, 80b), das wenigstens einen Formschlussbereich (68a; 68b) aufweist, mit dem das Solarmodulhalteelement (50a; 50b, 78b, 80b) formschlüssig in der wenigstens einen Halteelementaufnahme (48a, 66a; 48b, 66b) kraft- und/oder formschlüssig befestigbar ist.

9. Solarmodulhaltevorrichtung nach einem der vorhergehenden Ansprüche, **gekennzeichnet durch** wenigstens ein Solarmodulhalteelement (50a; 50b, 78b, 80b), das wenigstens ein Formschlusselement (74a, 76a; 74b, 76b), insbesondere ein Hakenelement aufweist, das zur formschlüssigen Verbindung mit einem Solarmodul (14a, 16a; 14a, 16b) vorgesehen ist.

10. Solarmodulhaltevorrichtung nach Anspruch 9, **dadurch gekennzeichnet, dass** das wenigstens eine Formschlusselement (74a, 76a; 74b, 76b) dazu vorgesehen ist, in einem mit dem Grundträger (26a, 28a; 26b, 28b) verbundenen Zustand in Querrichtung seitlich von der Seitenwandung des Grundträgers (26a, 28a; 26b, 28b) beabstandet angeordnet zu sein.

11. Solarmodulhaltevorrichtung nach einem der vorhergehenden Ansprüche, **gekennzeichnet durch** wenigstens ein Solarmodulhalteelement (50a; 50b, 78b, 80b), das zwei Formschlusselemente (74a, 76a; 74b, 76b), insbesondere zwei Hakenelemente aufweist, die in einem mit dem Grundträger (26a, 28a; 26b, 28b) verbundenen Zustand in Querrichtung auf gegenüberliegenden Seiten des Grundträgers (26a, 28a; 26b, 28b) angeordnet sind.

12. Solarmodulhaltevorrichtung nach Anspruch 11, **dadurch gekennzeichnet, dass** das Solarmodulhalteelement (50a; 50b, 78b, 80b) als ein U-förmig geformtes plattenartiges Element ausgebildet ist, das an seinen Querenden jeweils ein Formschlusselement (74a, 76a; 74b, 76b), insbesondere ein Hakenelement ausbildet.

13. Solarmodulhaltevorrichtung nach einem der vorhergehenden Ansprüche, **gekennzeichnet durch** wenigstens zwei unterschiedliche Solarmodulhalteelemente (50a; 50b, 78b, 80b), die unterschiedliche Formschlusselemente (74a, 76a; 74b, 76b) zur Anbindung unterschiedlicher Solarmodule (14a, 16a; 14a, 16b) aufweise, wobei die unterschiedlichen Solarmodulhalteelemente (50a; 50b, 78b, 80b) dazu vorgesehen sind, wahlweise über die wenigstens eine Halteelementaufnahme (48a, 66a; 48b, 66b) mit dem Grundträger (26a, 28a; 26b, 28b) verbunden zu werden.

14. Solarmodulhaltevorrichtung nach einem der vorhergehenden Ansprüche, **dadurch gekennzeichnet, dass** das Grundgestell (20a) zumindest ein rotierbar gelagertes Befestigungsrohr (22a) aufweist, über das die Solarmodule (14a, 16a; 14a, 16b) sonnenstandfolgend auf einem Untergrund (18a) montierbar sind.

15. Solarmodulhaltevorrichtung einem der vorhergehenden Ansprüche, **dadurch gekennzeichnet, dass** der Grundträger (26a, 28a; 26b, 28b) zumindest zwei unterschiedliche Befestigungsbereiche (82a, 84a; 82b, 84b, 86b, 88b) ausbildet, über die zumindest ein Solarmodul (14a, 16a; 14a, 16b) betriebssicher an den Grundträger (26a, 28a; 26b, 28b) montierbar ist.

16. Solarmodulhaltevorrichtung einem der vorhergehenden Ansprüche, **dadurch gekennzeichnet, dass** der Grundträger (26a, 28a; 26b, 28b) als ein Blechbiegebauteil ausgebildet ist.

17. Solarmodulsystem (12a; 12b) mit einer Solarmodulhaltevorrichtung (10a; 10b) nach einem der vorhergehenden Ansprüche und mit mehreren an der Solarmodulhaltevorrichtung (10a; 10b) montierten Solarmodulen (14a, 16a; 14a, 16b).
